Europäisches Patentamt

European Patent Office

Office européen des brevets

(11) Veröffentlichungsnummer: **0 331 101 B1**

(12) **EUROPÄISCHE PATENTSCHRIFT**

(45) Veröffentlichungstag der Patentschrift:
15.01.92 Patentblatt 92/03

(51) Int. Cl.$^5$: **B60G 11/26,** B60G 17/04,
B66C 9/10

(21) Anmeldenummer: **89103476.1**

(22) Anmeldetag: **28.02.89**

(54) Federbein für Kranfahrzeuge.

(30) Priorität: **02.03.88 DE 3806709**

(43) Veröffentlichungstag der Anmeldung:
**06.09.89 Patentblatt 89/36**

(45) Bekanntmachung des Hinweises auf die
Patenterteilung:
**15.01.92 Patentblatt 92/03**

(84) Benannte Vertragsstaaten:
**DE ES FR GB IT**

(56) Entgegenhaltungen:
**WO-A-88/06106
DE-A- 3 500 601**

(56) Entgegenhaltungen:
DE-B- 1 057 465
FR-A- 1 185 526
FR-A- 2 551 014
US-A- 4 220 352

(73) Patentinhaber: **Fried. Krupp Gesellschaft mit
beschränkter Haftung
Altendorfer Strasse 103
W-4300 Essen 1 (DE)**

(72) Erfinder: **Batek, Peter, Dipl.-Ing.
Willbeckerstrasse 86
W-4006 Erkrath 2 (DE)**
Erfinder: **Weiskopf, Hans, Dipl.-Ing.
Schützenstrasse 122
W-4010 Hilden (DE)**

## Beschreibung

Die Erfindung betrifft ein Federbein mit einem an dem Rahmen eines Kranfahrzeugs befestigten äußeren Führungsgehäuse, einem in diesem und relativ zu diesem axial und rotatorisch bewegbaren Stützelement für einen Radträger und einem axial mit dem Führungsgehäuse fest verbundenen Kolben, der in das Innere des Stützelements hineinreicht und eine Begrenzung eines innerhalb des Stützelements befindlichen Druckraums eines Hydraulikzylinders bildet.

Aus der US-A-4220352 ist ein Federbein gemäß dem Oberbegriff des Anspruchs 1 für die Vorderachse eines Radpaares eines Anhängers mit kippbarer Mulde bekannt. Bei diesem Federbein ist das äußere, zylindrische Gehäuse am Rahmen des Anhängers befestigt. Das hohlzylindrisch ausgebildete Stützelement ist axial und rotatorisch in dem äußeren Führungsgehäuse beweglich geführt. Ein hohlzylindrischer Kolben ist mit seinem Boden axial beaufschlagbar mit dem Führungsgehäuse bzw. dessen Deckel verbunden. Im übrigen weist der Boden des Kolbens gegenüber dem Deckel des Gehäuses in radialer und axialer Richtung ein Spiel auf. Mit seinem offenen Ende ist der Kolben in dem durch die Innenwand des Stützelements gebildeten Hydraulikzylinder geleitbar geführt. Durch den Hohlraum des Kolbens und den Innenzylinder des Stützelements wird ein hydraulischer Druckraum gebildet. Die Flüssigkeit dieses Druckraums stützt sich gegen ein Stickstoff-Druckpolster im oberen Teil des Kolbens ab.

Weiterhin sind an Muldenkippern, Federbeine bekannt, bei denen ein äußeres Führungsgehäuse als oben geschlossener Hydraulikzylinder ausgebildet ist. In diesem Hydraulikzylinder ist ein Kolben gleitend geführt, dessen relativ starke Kolbenstange im unteren, hydraulisch "offenen", d.h. hydraulisch nicht beanspruchten Teil mechanisch geführt ist. An dem freien Ende der als axial verschiebbares Stützelement dienenden Kolbenstange ist ein Flansch angeordnet, an dem die Radaufhängung befestigt ist.

Aus der DE-B-1057465 ist noch eine Radaufhängung bekannt, die einen äußeren Führungszylinder (17) aufweist, der mit dem Achsschenkel (4) verbunden ist und somit ständigen Höhenänderungen gegenüber den Fahrzeugrahmen ausgesetzt ist. Die in diese Anordnung führende Druckmittelleitung (22) muß demgemäß flexibel ausgebildet sein, was bei einem Fahrzeug mit der Gefahr von Beschädigungen verbunden ist. Vor allem aber weist das Stützelement (12) keinen in dieses einsetzbaren und lösbar mit diesem verbindbaren, separaten Hydraulikzylinder für den Kolben des Systems auf.

Bei großen Querkräften, wie sie z.B. beim bremsen oder beim Fahren über ein Hindernis auftreten, erfährt das Stützelement bzw. die Kolbenstange ein Biegemoment, das den Kolben aus seiner axialen Ausrichtung zu bringen versucht. Dabei kann es zu Verkantungen des Kolbens, die sein Gleiten innerhalb des Zylinders erschweren, und zu erhöhten Leckverlusten kommen.

Der Erfindung liegt deshalb die Aufgabe zugrunde, ein Federbein zu schaffen, bei dem die erwähnten Nachteile mit einfachen Mitteln vermieden werden.

Diese Aufgabe wird erfindungsgemäß durch die Merkmale des kennzeichnenden Teils des Anspruchs 1 gelöst.

Eine infolge eines starken Biegemoments eintretende elastische Verformung des Stützelements bleibt weitgehend ohne Auswirkungen auf den separaten Hydraulikzylinder, so daß die Kolbendichtungen praktisch keinen zusätzlichen mechanischen Kräften ausgesetzt sind und dadurch eine längere Lebensdauer erwarten lassen. Da der hydraulische Druck ausschließlich im Innern des separaten Hydraulikzylinders aufgebracht wird, ergeben sich beim Führungsgehäuse keine Probleme mit Leckverlusten. Im übrigen ergibt sich der besondere Vorteil, daß der Hydraulikzylinder im Falle eines Defekts einfach ausgewechselt und durch einen neuen ersetzt werden kann. Durch die auch rotatorische Fixierung der Kolbenstange im Führungsgehäuse ist es möglich, die unter Druck stehende Hydraulikverbindung vom Federbein z.B. zu dem Druckspeicher in einfacher Weise so zu verlegen, daß mechanische Beschädigungen ausgeschlossen sind. Die Verbindung mit dem Federbein und dem Hydrospeicher erlaubt zudem in einfacher Weise durch den Einbau eines Wegeventils die Menge des Hydraulikmediums zu vergrößern und damit die Höhe des Fahrgestells gegenüber dem Rad bzw. dem Boden zu verändern. Mit dem Drosselventil wird in an sich bekannter Weise eine Dämpfung der Bewegungen des Stützelements gegenüber dem Führungsgehäuse bewirkt.

Eine vorteilhafte Weiterbildung der Erfindung ist im Unteranspruch beschrieben. Durch die Ausbildung des Hydraulikzylinders als doppeltwirkender Hydraulikzylinder ist es möglich, z.B. das Stützelement und damit das zugehörige Rad bei abgestütztem Fahrgestell anzuheben.

Ein Ausführungsbeispiel des Gegenstandes der Erfindung ist in der Zeichnung teilweise schematisch dargestellt und wird im folgenden näher erläutert.

Es zeigen

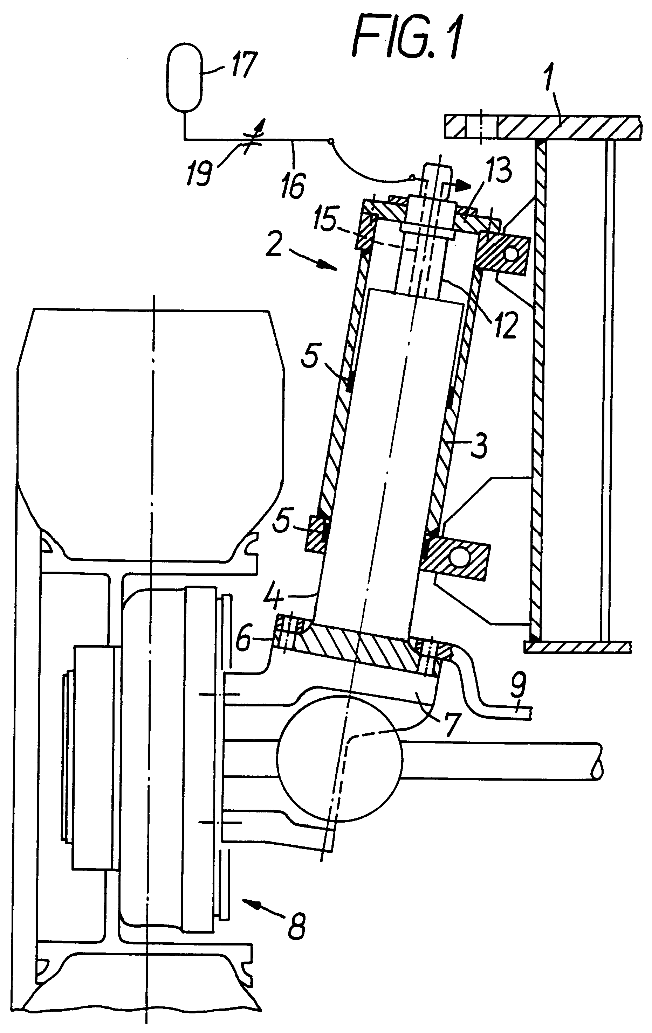

Fig. 1     ein an einem Kranfahrgestell befestigtes Federbein mit der Radabstützung in einem teilweisen Längsschnitt und

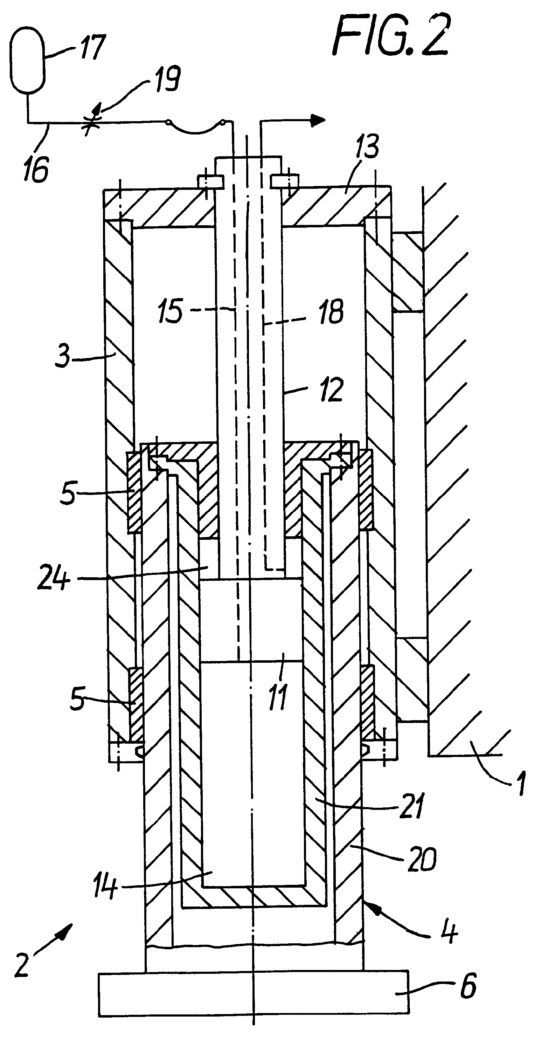

Fig. 2    das Federbein in einer vollständig geschnittenen, auszugsweisen Darstellung.

An dem Fahrzeugrahmen 1 eines Straßenkrans ist ein Federbein 2 angeordnet. Dieses besteht aus einem an dem Fahrzeugrahmen 1 befestigten hohlzylindrischen Führungsgehäuse 3, in dem ein zylindrisches Stützelement 4 gleit- und drehbar geführt ist. Zum übertragen von z.B. durch Bremsen hervorgerufene Querkräfte sind ringförmige Führungselemente 5 in dem Führungsgehäuse 3 aus z.B. Bronze oder Kunststoff vorgesehen.

Das Stützelement 4 ist an seinem äußeren Ende mit einem Flansch 6 versehen, an dem eine sog. Achsschenkelglocke oder ein Radträger 7 zur Aufnahme eines der Räder 8 des Krans befestigt ist. Außerdem ist an dem Flansch 6 ein Lenkhebel 9 befestigt, der mit einem nicht näher dargestellten Lenkgestänge verbunden ist.

Das Stützelement 4 ist zweiteilig ausgebildet und weist ein äußeres Führungsrohr 20 und einen darin befindlichen Hydraulikzylinder 21 auf, wobei das Führungsrohr 20 und der Hydraulikzylinder 21 lösbar miteinander verbunden sind. Innerhalb des Hydraulikzylinders 21 befindet sich ein Kolben 11.

Die Kolbenstange 12 des Kolbens 11 weist von dem Flansch 6 weg und ist mit dem an dem geschlossenen Ende des Führungsgehäuses 3 befestigten Deckel bzw. Boden 13 fest verbunden, d.h. axial und rotatorisch gegen das Führungsgehäuse 3 unbeweglich angeordnet.

Der unter dem Kolben 11 befindliche, in sich geschlossene Druckraum 14 des Hydraulikzylinders 21 bzw. des Federbeins 2 ist über eine durch den Kolben 11 und die Kolbenstange 12 gehende Bohrung 15 und eine Leitung 16 mit einem Hydro- oder Druckspeicher 17 verbunden. Die Kolbenstange 12 ist von einer weiteren Bohrung 18 durchsetzt, die einerseits mit der Zylinderkammer 24 über dem Kolben 11 verbunden ist und andererseits mit einer anderen Versorgungsleitung oder alternativ mit dem Druckspeicher 17 in Verbindung stehen oder — zum Blockieren der Relativbewegung des Stützelements 4 gegenüber dem Führungsgehäuse 3 bzw. dem Kolben 11 — unter Abschaltung des Druckspeichers 17 unmittelbar mit dem Druckraum 14 verbunden sein kann.

Der hydraulische Druck im Druckraum 14 ist im wesentlichen gleich dem im Druckspeicher 17 eingestellten Druck. Bei einer Vergrößerung der Last bzw. bei einem von unten während der Fahrt auf das Rad 8 ausgeübten Stoß schiebt sich das Führungsgehäuse 3 weiter auf das Stützelement 4 auf bzw. taucht das Stützelement 4 tiefer in das Gehäuse 3 ein, wodurch der Druckraum 14 verkleinert wird. Dadurch wird Hydraulikmedium aus dem Druckraum 14 durch die Bohrung 15 teilweise in Richtung auf den Druckspeicher 17 verdrängt, in dem der hydraulische Druck gegenüber dem eingestellten Druck entsprechend ansteigt, so daß die Relativbewegung zwischen dem Stützelement 4 und dem Führungsgehäuse 3 im Rahmen des hydraulischen Gleichgewichts begrenzt wird.

Um eine stoßartige Relativbewegung zu vermeiden, ist in der zum Druckspeicher 17 führenden leitung 16 eine einstellbare Drossel 19 eingebaut.

Zum Anheben des Rades 8 bei abgestütztem Fahrgestell wird die über dem Kolben 11 befindliche Zylinderkammer 24 druckbeaufschlagt und der Druckraum 14 druckentlastet.

Für das Verständnis der Erfindung nicht notwendige Teile wie z.B. eine Druckmittelquelle zum Ergänzen von hydraulischen Leckverlusten sind in der Zeichnung nicht dargestellt.

## Patentansprüche

1. Federbein (2) mit einem an dem Rahmen (1) eines Fahrzeugs befestigten äußeren Führungsgehäuse (3), einem in diesem und relativ zu diesem axial und rotatorisch bewegbaren Stützelement (4) für einen Radträger (7) und einem axial mit dem Führungsgehäuse (3) fest verbundenen Kolben (11), der in das Innere des Stützelements (4) hineinreicht und eine Begrenzung eines innerhalb des Stützelements (4) befindlichen Druckraums (14) eines Hydraulikzylinders (21) bildet, **dadurch gekennzeichnet,**
daß das Fahrzeug ein Kranfahrzeug ist,
daß der Hydraulikzylinder (21) als in das Stützelement (4) einsetzbare und lösbar mit diesem verbindbare, separate Einheit ausgebildet ist,
daß der Kolben (11) über eine Kolbenstange (12) auch rotatorisch fest mit dem führungsgehäuse (03) verbunden ist
und daß der Druckraum (14) des Hydraulikzylinders (21) durch eine durch den Kolben (11) und die Kolbenstange (12) gehende Bohrung (15) und über eine Drossel (19) mit einem außerhalb des Druckraums (14) befindlichen Druckspeicher (17) verbunden ist.

2. Federbein nach Anspruch 1, dadurch gekennzeichnet, daß der Hydraulikzylinder (21) als doppeltwirkender Zylinder ausgebildet ist und die Kolbenstange (12) von einer weiteren Bohrung (18) durchsetzt ist, die zu der dem Druckraum (14) gegenüberliegenden Zylinderkammer (24) des Hydraulikzylinders (21) führt.

EP 0 331 101 B1

**Claims**

1. A suspension strut (2) having : an outer guide casing (3) attached to the frame (1) of a vehicle ; a supporting element (4) which can move axially and rotate in the casing and relatively thereto for a wheel carrier (7) ; and a piston (11) which is rigidly connected axially to the guide casing (3) and which extends into the interior of the supporting element (4) and which bounds a pressure chamber (14) of a hydraulic cylinder (21) located inside the supporting element (4), characterized in

that the vehicle is a travelling crane,

that the hydraulic cylinder (21) takes the form of a separate unit which can be inserted into the supporting element (4) and can be releasably connected thereto,

that the piston (11) is also connected rigidly for rotation to the guide casing (3) via a piston rod (12), and

that the pressure chamber (14) of the hydraulic cylinder (21) is connected via a bore (15) extending through the piston (11) and the piston rod (12) and via a throttle (19) to a pressure accumulator (17) located outside the pressure chamber (14).

2. A suspenson strut according to claim 1, characterized in that the hydraulic cylinder (21) takes the form of a double action cylinder and extending through the piston rod (12) is another bore (18) which extends to the cylinder chamber (24) of the hydraulic cylinder (21) opposite the pressure chamber (14).

**Revendications**

1. Jambe de suspension (2) équipée d'une boîte de guidage externe (3) fixée au cadre (1) d'un véhicule à grue, d'un élément d'appui (4) mobile dans le sens axial et rotatoire dans cette boîte et par rapport à celle-ci pour un support de roue (7) ainsi que d'un piston (11) relié de manière fixe et axiale à la boîte de guidage (3) et entrant dans l'intérieur de l'élément d'appui (4), constituant ainsi une limitation pour une chambre de compression (14) d'un cylindre hydraulique (21), qui se trouve à l'intérieur de l'élément d'appui (4), caractérisée en ce que le véhicule est un véhicule à grue,

que le cylindre hydraulique (21) se présente sous la forme d'une unité séparée pouvant être insérée dans l'élément d'appui (4) et y être reliée de manière mobile,

que le piston (11) est, par l'intermédiaire d'une tige de piston (12), également relié de manière immobile au boîtier de guidage (3) sur le plan de la rotation,

et que la chambre de compression (14) du cylindre hydraulique (21) est reliée à un réservoir sous pression (17) situé à l'extérieur de la chambre de compression (14), par l'intermédiaire d'un alésage (15) traversant le piston (11) et la tige du piston (12), ainsi que par un papillon (19).

2. Jambe de suspension selon la revendication 1, caractérisée en ce que le cylindre hydraulique (21) se présente sous forme de cylindre à double effet et que la tige du piston (12) est traversée par un alésage supplémentaire (18) menant à la chambre (24) du cylindre hydraulique (21), située à l'opposé de la chambre de compression (14).

4

# FIG.1

# FIG.2